# EUROPÄISCHE PATENTSCHRIFT

(11) **EP 3 568 900 B1**
(45) Veröffentlichungstag und Bekanntmachung des Hinweises auf die Patenterteilung: **27.03.2024**
(21) Anmeldenummer: 18707294.7
(22) Anmeldetag: 14.02.2018
(51) Int. Cl.: H02K 3/50, H02K 3/38, H02K 9/22

(54) **STATOR FÜR EINE ELEKTRISCHE ROTIERENDE MASCHINE**
STATOR FOR ELECTRIC MACHINE
STATOR PUR MACHINE ÉLECTRIQUE

(30) Priorität: 21.02.2017 EP 17157172
(43) Veröffentlichungstag der Anmeldung: 20.11.2019
(73) Patentinhaber: Innomotics GmbH, 90441 Nürnberg (DE)
(72) Erfinder: SEWIOLO, Benjamin, 90587 Obermichelbach (DE)
(74) Vertreter: Siemens Patent Attorneys
(86) Internationale Anmeldenummer: PCT/EP2018/053661
(87) Internationale Veröffentlichungsnummer: WO 2018/153745

(56) Entgegenhaltungen:
- EP-A1- 2 621 062
- US-A- 5 623 178
- US-A1- 2006 232 143

## Beschreibung

Die Erfindung betrifft einen Stator für eine elektrische rotierende Maschine.

Darüber hinaus betrifft die Erfindung eine elektrische rotierende Maschine mit mindestens einem derartigen Stator.

Ein derartiger Stator kommt bevorzugt in einer elektrischen rotierenden Maschine, insbesondere in einem Motor oder Generator, vor, die eine Leistungsaufnahme von mindestens einem Megawatt aufweist.

Üblicherweise werden die Statorwicklungen einer derartigen elektrischen rotierenden Maschine als Formspulen, die auch Stabspulen genannt werden, ausgeführt. Formspulen werden beispielsweise mittels Gießen oder Pulvermetallurgie hergestellt. An den Enden der Formspulen befindet sich ein Wickelkopf, der durch Biegen und Abkröpfen der Leiter der Formspulen entsteht. Dieser Wickelkopf benötigt einen erheblichen axialen Bauraum. Durch die zusätzliche inaktive Leiterlänge des Wickelkopfes entstehen ohmsche Verluste, die den Wirkungsgrad der elektrischen rotierenden Maschine verringern. Darüber hinaus ist es erforderlich, die Wickelköpfe zu kühlen. Zur Kühlung wird weiterer Bauraum benötigt.

Insbesondere bei schnelllaufenden niederpoligen Maschinen wirkt sich der durch die Wickelköpfe vergrößerte Lagerabstand nachteilig auf die Rotordynamik aus. Ferner sind zusätzliche aufwendige Versteifungsmaßnahmen aufgrund der großen Leiterlängen erforderlich, um unzulässige Schwingungen und Verformungen im Betrieb zu verhindern. Darüber hinaus erhöhen sich die Gesamtlänge und das Gewicht der elektrischen rotierenden Maschine. Insbesondere bei einem modularen Aufbau großer Maschinen, bei dem mehrere Teilmaschinen in Axialrichtung eine Gesamtmaschine bilden, entstehen aufgrund der Wickelköpfe erhebliche elektrisch nicht genutzte Längen.

Die Patentschrift DE 10 2009 032 882 B3 beschreibt ein Verfahren zur Herstellung einer Formspule für eine Etagenwicklung einer dynamoelektrischen Maschine sowie eine mittels des besagten Verfahrens hergestellte Formspule. Um die Herstellung der Formspule zu vereinfachen, wird diese aus einer Rohspule hergestellt, wobei die Rohspule zwei Längsseiten aufweist, die dafür vorgesehen sind, in Nuten eines Ständers oder eines Rotors der dynamoelektrischen Maschine eingelegt zu werden. Die Rohspule weist zwei Wickelkopfseiten auf, die dafür vorgesehen sind, jeweils einen Wickelkopf der Formspule zu bilden, wobei die Längsseiten um 90° derart gebogen werden, um die Längsseiten in die Nuten einzulegen und die Wickelkopfseiten von den Längsseiten abzukröpfen.

Die Offenlegungsschrift DE 199 14 942 A1 beschreibt ein Verfahren zur Herstellung einer Statorwicklung für eine elektrische Maschine und eine solche Statorwicklung. Die Maschine hat ausgeprägte Pole. Spulenleiter ragen mit ihren Enden in axialer Richtung über das Statorblechpaket hinaus und sind in Klemmen von Baugruppen befestigt. Auf den Baugruppen befinden sich Leiterbahnen, die die Windungen mit den Leitern bilden bzw. von Klemmen zu externen Anschlußstellen verlaufen.

Die Patentschrift EP 1 742 330 B1 beschreibt einen Ständerwickelkopf für ein Ständerteil eines Turbogenerators. Der Ständerwickelkopf ist in Form einer Scheibe mit einer mittigen Auslassung zur Durchführung eines Läufers gebildet, wobei die Scheibe einen isolierenden Grundkörper aufweist, in den eine elektrische Verbindung zur Kontaktierung eines Ständerleiters integriert ist. Die Kontaktierung wird in Form einer Steckverbindung und/oder mit Durchkontaktierungen hergestellt.

Die Offenlegungsschrift DE 10 2014 207 621 A1 offenbart einen Stator einer elektrischen rotierenden Maschine, der einen Statorkern mit mehreren Schlitzen, eine segmentierte Wicklung mit mehreren Phasen sowie mehrere Basisplatten, die auf jedes Ende des Statorkerns in axialer Richtung geschichtet sind, enthält. Der Statorkern und mehrere Wicklungsstangen der segmentierten Wicklung bilden eine Statorkernanordnung. Die mehreren Basisplatten und mehrere Wicklungsendverbinder der segmentierten Wicklung bilden mehrere Basisplattenanordnungen.

Der Stator ist durch die Statorkernanordnung und die mehreren Basisplattenanordnungen, die auf jedes Ende der Statorkernanordnung geschichtet sind, konfiguriert.

EP 2 621 062 A1 offenbart einen Stator gemäß Oberbegriff des Anspruchs 1.

Der Erfindung liegt die Aufgabe zugrunde, einen Stator für eine elektrische rotierende Maschine bereitzustellen, der, im Vergleich zum Stand der Technik, eine geringere axiale Länge aufweist.

Diese Aufgabe wird erfindungsgemäß durch einen Stator gemäß Anspruch 1 gelöst.

Darüber hinaus wird die Aufgabe erfindungsgemäß durch eine elektrische rotierende Maschine mit mindestens einem derartigen Stator gelöst.

Die in Bezug auf den Stator nachstehend angeführten Vorteile und bevorzugten Ausgestaltungen lassen sich sinngemäß auf die elektrische rotierende Maschine übertragen.

Die Erfindung basiert auf der Idee, die axiale Länge einer elektrischen rotierenden Maschine durch eine möglichst kompakte Wickelkopfplatine zu verkleinern. Einen signifikanten Teil des Bauraums einer Wickelkopfplatine nehmen beispielsweise Kühlkanäle ein, die in der Wickelkopfplatine angeordnet sind und durch die ein Kühlmittel, beispielsweise ein Kühlfluid, zur Entwärmung der stromdurchflossenen Leiterbahnen der Wickelkopfplatine verläuft. Derartige Kühlkanäle sind insbesondere dann erforderlich, wenn die Wärmeleitfähigkeit des ersten dielektrischen Materials des Grundkörpers nicht ausreicht, die Wärme von den stromdurchflossenen Leiterbahnen abzuführen. Ferner müssen insbesondere zwischen den Leiterbahnen Mindestabstände eingehalten werden, damit es nicht zu Überschlägen zwischen den Leiterbahnen kommt, wobei die Mindestabstände von den Materialeigenschaften des verwendeten Dielektrikums abhängen. Um eine möglichst kompakte Bauform der Wickelkopfplatine, beispielsweise mit möglichst geringen Abständen zwischen den Leiterbahnen und zumindest wenigen Kühlkanälen, zu ermöglichen, wird vorgeschlagen, verschiedene dielektrische Werkstoffe für die Wickelkopfplatine zu verwenden, die sich hinsichtlich ihrer Wärmeleitfähigkeit und Durchschlagsfestigkeit unterscheiden. Durch die Verwendung spezialisierter Materialien und deren gezielter Anordnung wird der Platzbedarf der Wickelkopfplatine erheblich reduziert.

Dabei weist erfindungsgemäß der zweite dielektrische Werkstoff eine höhere Wärmeleitfähigkeit als der erste dielektrische Werkstoff des Grundkörpers auf, wobei der Bereich mit dem zweiten dielektrischen Werkstoff derartig zwischen zumindest einer Leiterbahn und dem Statorblechpaket angeordnet ist, dass Wärme über den zweiten dielektrischen Werkstoff zwischen der zumindest einen Leiterbahn und dem Statorblechpaket übertragbar ist. Erfindungsgemäß enthält der zweite dielektrische Werkstoff Aluminiumnitrid und/oder Berylliumoxid. Durch eine Anordnung eines Bereichs mit einem auf eine hohe Wärmeleitfähigkeit optimierten zweiten dielektrischen Werkstoff kann zumindest teilweise auf Kühlkanäle in der Wickelkopfplatine verzichtet werden, wodurch sich der Platzbedarf der Wickelkopfplatine, insbesondere in axialer Richtung, reduziert.

Weiter weist der dritte dielektrische Werkstoff bevorzugt eine höhere Durchschlagsfestigkeit als der erste dielektrische Werkstoff auf, wobei der Bereich mit dem dritten dielektrischen Werkstoff zwischen zumindest zwei Leiterbahnen angeordnet ist. Durch die erhöhte Durchschlagfestigkeit, insbesondere in dem Bereich zwischen zumindest zwei benachbarten Leiterbahnen, ist es möglich, den Abstand zwischen den Leiterbahnen zu verkleinern und den Platzbedarf der Wickelkopfplatine zu reduzieren.

In einer bevorzugten Ausgestaltung ist die zumindest eine Wickelkopfplatine zumindest teilweise mit einem additiven Fertigungsverfahren hergestellt. Additive Fertigungsverfahren sind beispielsweise 3D-Druck und Siebdruck. Beispielsweise wird zumindest einer der dielektrischen Werkstoffe mittels eines 3D-Druck-Verfahrens oder eines Siebdruckverfahrens angeordnet, während die Leiterbahnen in einem darauf folgenden Schritt, beispielsweise mit einem Druckgussverfahren, gegossen werden. Ein additives Fertigungsverfahren ermöglicht die Realisierung komplexer und kompakter Strukturen, was zu einer Verkleinerung der Wickelkopfplatine führt.

Bevorzugt ist zumindest einer der dielektrischen Werkstoffe als keramischer Werkstoff ausgebildet. Ein keramischer Werkstoff schließt Keramiken und Kompositwerkstoffe, die zumindest einen Anteil mindestens einer Keramik, beispielsweise ein Keramikpulver, aufweisen, ein. Derartige keramische Werkstoffe weisen beispielsweise gute Isolationseigenschaften, eine hohe mechanische Festigkeit und/oder eine gute Wärmeleitfähigkeit auf. Die Verwendung zumindest eines keramischen Werkstoffs ermöglicht die Realisierung einer kompakten Wickelkopfplatine.

In einer weiteren vorteilhaften Ausführung enthält der dritte dielektrische Werkstoff Aluminiumnitrid und/oder Berylliumoxid. Die Wärmeleitfähigkeit von Aluminiumnitrid liegt im Bereich von 180 bis 220 W/mK, die Wärmeleitfähigkeit von Berylliumoxid liegt bei 200 bis 250 W/mK. Daher sind Aluminiumnitrid und Berylliumoxid durch ihre hohe Wärmeleitfähigkeit sehr gut geeignet, in den stromdurchflossenen Leiterbahnen entstehende Wärme abzuführen.

In einer weiteren vorteilhaften Ausgestaltung liegt die zumindest eine Wickelkopfplatine auf einem Maschinengehäuse der elektrischen rotierenden Maschine auf. Das Maschinengehäuse ist beispielsweise aus einem metallischen Werkstoff hergestellt. Die in den stromdurchflossenen Leiterbahnen entstehende Wärme ist zusätzlich über das Maschinengehäuse abführbar, was zu einer verbesserten Entwärmung der Wickelkopfplatine führt.

Es weist der zweite dielektrische Werkstoff eine höhere Wärmeleitfähigkeit als der erste dielektrische Werkstoff des Grundkörpers auf, wobei der Bereich mit dem zweiten dielektrischen Werkstoff derartig zwischen zumindest einer Leiterbahn und dem Maschinengehäuse angeordnet ist, dass Wärme über den zweiten dielektrischen Werkstoff zwischen der zumindest einen Leiterbahn und dem Maschinengehäuse übertragbar ist. Durch eine derartige Anordnung ist die in den stromdurchflossenen Leiterbahnen entstehende Wärme effizient in Richtung des Maschinengehäuses und des Statorblechpakets abführbar. Daher können Kühlkanäle in der Wickelkopfplatine zumindest eingespart werden, wodurch sich der Platzbedarf der Wickelkopfplatine, insbesondere in axialer Richtung, reduziert.

Bevorzugt weist der erste dielektrische Werkstoff eine höhere mechanische Festigkeit auf als der zweite dielektrische Werkstoff und der dritte dielektrische Werkstoff. Insbesondere umgibt der erste dielektrische Werkstoff des Grundkörpers den zweiten und dritten dielektrischen Werkstoff zumindest teilweise. Durch die höhere mechanische Festigkeit wird die Wickelkopfplatine auch bei großen mechanischen Belastungen, beispielsweise bei Vibrationen, hohen Drehzahlen oder großen Drehmomentänderungen, nicht beschädigt.

In einer bevorzugten Ausgestaltung enthält zumindest einer der dielektrischen Werkstoffe einen Kunststoff mit einem Keramikpulver. Ein derartiger Kompositwerkstoff weist die elektrischen und/oder thermischen Eigenschaften der Keramik auf und ist, insbesondere mit einem additiven Fertigungsverfahren, einfach und kostengünstig zu verarbeiten. Insbesondere Wickelkopfplatinen mit Bereichen aus verschiedenen Kunststoffen und/oder verschiedenen Keramikpulvern sind einfach und kostengünstig herstellbar.

In einer weiteren vorteilhaften Ausführung weist die Wickelkopfplatine mindestens drei Lagen auf. Ein derartiger Lagenaufbau erleichtert das Design, insbesondere die Simulation, der Wickelkopfplatine.

Bevorzugt sind in zumindest einer Lage der Wickelkopfplatine zumindest zwei unterschiedliche dielektrische Werkstoffe angeordnet. Durch die Verwendung insbesondere spezialisierter Materialien und deren gezielter Anordnung, beispielsweise innerhalb einer Lage, wird der Platzbedarf der Wickelkopfplatine erheblich reduziert.

Im Folgenden wird die Erfindung anhand der in den Figuren 1-8 dargestellten Beispiele, welche nicht unter die Erfindung fallen ("Beispiele" im Folgenden) sowie der in den Figuren 9-11 dargestellten Ausführungsbeispiele näher beschrieben und erläutert.

Es zeigen:
- FIG 1: einen Längsschnitt einer elektrischen rotierenden Maschine,
- FIG 2: einen vergrößerten Längsschnitt eines ersten Beispiels eines Stators einer elektrischen rotierenden Maschine im Bereich der Wickelkopfplatine,
- FIG 3: einen vergrößerten Längsschnitt eines zweiten Beispiel eines Stators einer elektrischen rotierenden Maschine im Bereich der Wickelkopfplatine,
- FIG 4: einen vergrößerten Querschnitt des zweiten Beispiels des Stators im Bereich der Wickelkopfplatine,
- FIG 5: einen vergrößerten Längsschnitt eines dritten Beispiels eines Stators einer elektrischen rotierenden Maschine im Bereich der Wickelkopfplatine,
- FIG 6: einen vergrößerten Längsschnitt eines vierten Beispiels eines Stators einer elektrischen rotierenden Maschine im Bereich der Wickelkopfplatine,
- FIG 7: einen vergrößerten Längsschnitt eines fünften Beispiels eines Stators einer elektrischen rotierenden Maschine im Bereich der Wickelkopfplatine,
- FIG 8: einen vergrößerten Längsschnitt eines sechsten Beispiels eines Stators einer elektrischen rotierenden Maschine im Bereich der Wickelkopfplatine,
- FIG 9: einen vergrößerten Längsschnitt einer ersten Ausführungsform eines Stators einer elektrischen rotierenden Maschine im Bereich der Wickelkopfplatine,
- FIG 10: einen vergrößerten Längsschnitt einer zweiten Ausführungsform eines Stators einer elektrischen rotierenden Maschine im Bereich der Wickelkopfplatine und
- FIG 11: einen vergrößerten Längsschnitt einer dritten Ausführungsform eines Stators einer elektrischen rotierenden Maschine im Bereich der Wickelkopfplatine.

Gleiche Bezugszeichen haben in den verschiedenen Figuren die gleiche Bedeutung.

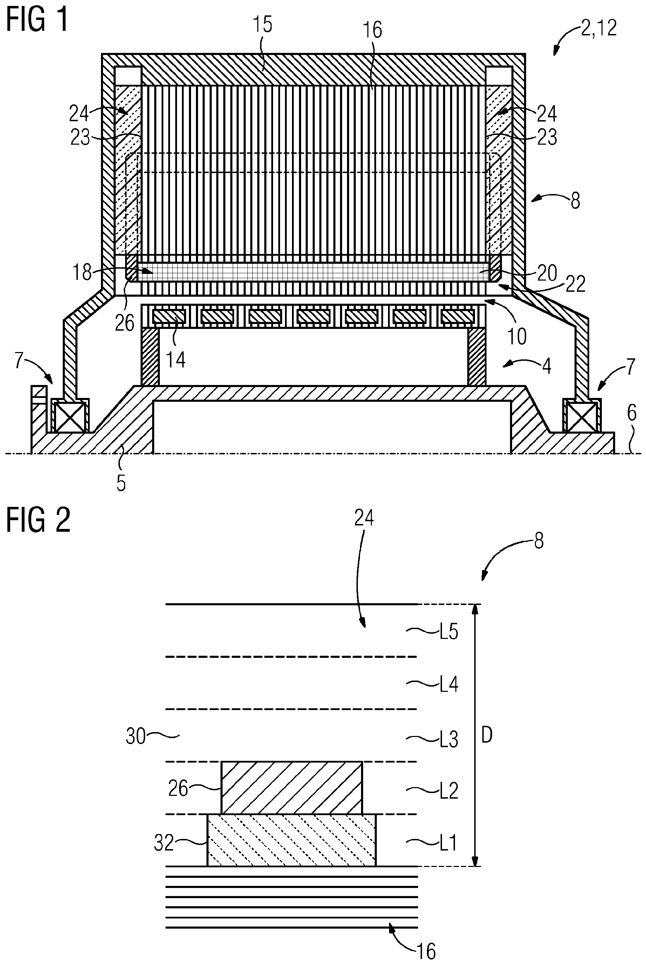

FIG 1 zeigt einen Längsschnitt einer elektrischen rotierenden Maschine 2, die einen Rotor 4 mit einer Welle 5 aufweist. Der Rotor 4 ist um eine Rotationsachse 6 rotierbar. Die Welle 5 ist über Lager 7 gelagert. Die elektrische rotierende Maschine 2 weist darüber hinaus einen den Rotor 4 umgebenden Stator 8 auf. Zwischen dem Rotor 4 und dem Stator 8 befindet sich ein Spalt 10, der insbesondere als Luftspalt ausgeführt ist. Die Rotationsachse 6 definiert eine Axialrichtung und eine Radialrichtung.

Die elektrische rotierende Maschine 2 ist exemplarisch als Synchronmaschine 12 ausgeführt und weist auf dem Rotor 4 Permanentmagnete 14 auf. Der Stator 8 umfasst ein Statorblechpaket 16 mit Wicklungen 18, wobei das Statorblechpaket 16 aus einer Vielzahl von geschichteten Elektroblechen aufgebaut ist. Die Wicklungen 18 weisen Spulenstäbe 20 auf, die in Axialrichtung durch jeweils eine Nut 22 des Statorblechpakets 16 verlaufen.

Auf beiden Stirnseiten 23 des Statorblechpakets 16 liegt jeweils mindestens eine Wickelkopfplatine 24 auf. Zusätzlich liegt die Wickelkopfplatine 24 auf einem Maschinengehäuse 15 der elektrischen rotierenden Maschine 2 auf und umfasst Leiterbahnen 26, die in Nuten 22 verlaufende Spulenstäbe 20 miteinander verbinden. Die Leiterbahnen 26 sowie die Spulenstäbe 20 werden aus einem Metall mit hoher Wärmeleitfähigkeit und hoher elektrischer Leitfähigkeit, beispielswiese aus Kupfer, hergestellt. Anschlüsse der Wicklungen 18 an einen Klemmenkasten sind aus Gründen der Übersichtlichkeit nicht dargestellt.

FIG 2 zeigt einen vergrößerten Längsschnitt eines ersten Beispiels eines Stators 8 einer elektrischen rotierenden Maschine 2 im Bereich der Wickelkopfplatine 24, die exemplarisch aus fünf Lagen L1, L2, L3, L4, L5 aufgebaut ist. Die Dicke D der gesamten Wickelkopfplatine 24 liegt im Zentimeterbereich, insbesondere im Bereich von 3 bis 10 cm. Die erste Lage L1 der Wickelkopfplatine 24 liegt auf dem Statorblechpaket 16 auf, sodass eine thermische Anbindung der Wickelkopfplatine 24 an das Statorblechpaket 16 besteht. Optional ist die oberste, exemplarisch fünfte, Lage L5 thermisch mit einer weiteren metallischen Fläche, beispielsweise einem Maschinengehäuse 15, das in FIG 1 dargestellt ist, verbunden, sodass die Wickelkopfplatine 24 zusätzlich thermisch mit dem Maschinengehäuse 15 verbunden ist.

In der zweiten Lage L2 verläuft eine Leiterbahn 26. Die Lagen L1, L2, L3, L4, L5 der Wickelkopfplatine 24 sind zu einem Großteil aus einem ersten dielektrischen Werkstoff 30 hergestellt. Insbesondere ist der dielektrische Werkstoff 30 als ein keramischer Werkstoff, beispielsweise Aluminiumoxid, ausgeführt. Aluminiumoxid bietet einen Kompromiss aus Festigkeit (Biegebruchfestigkeit zwischen 480 und 520 Mpa), Wärmeleitfähigkeit (zwischen 19 und 30 W/mK) und Preis. Um die thermische Anbindung der Leiterbahn 26 an das Statorblechpaket 16 zu verbessern, ist die Leiterbahn 26 in der zweiten Lage L2 über einen zweiten dielektrischen Werkstoff 32 in der ersten Lage L1 thermisch mit dem Statorblechpaket 16 verbunden. Der zweite dielektrische Werkstoff 32 weist eine höhere Wärmeleitfähigkeit als der erste dielektrische Werkstoff 30 auf. Insbesondere ist der zweite dielektrische Werkstoff 32 als ein keramischer Werkstoff ausgebildet. Beispielsweise enthält der zweite dielektrische Werkstoff 32 Aluminiumnitrid (Wärmeleitfähigkeit zwischen 180 und 220 W/mK) oder Berylliumoxid (Wärmeleitfähigkeit zwischen 200 und 250 W/mK). Der zweite dielektrische Werkstoff 32 ist insbesondere als durchgängiger Bereich zwischen der Leiterbahn 26 und dem Statorblechpaket 16 ausgeführt. Durch eine Verbesserung der thermischen Anbindung der Leiterbahn 26 und der damit verbundenen verbesserten Entwärmung ist es möglich, zumindest teilweise auf Kühlkanäle in der Wickelkopfplatine 24 zu verzichten, was zu einer kompakteren Wickelkopfplatine 24 führt.

Die Wickelkopfplatine 24 ist zumindest teilweise mit einem additiven Fertigungsverfahren hergestellt. Beispielsweise wird zumindest einer der dielektrischen Werkstoffe 30, 32, 34 mittels eines 3D-Druck-Verfahrens oder eines Siebdruckverfahrens angeordnet, während die Leiterbahnen 26 in einem darauf folgenden Schritt, beispielsweise mit einem Druckgussverfahren, gegossen werden.

Alternativ werden die Leiterbahnen 26 mit einem 3D-Druck-Verfahren oder einem Siebdruckverfahren hergestellt. Anschließend werden die dielektrischen Werkstoffe 30, 32, 34 um die Leiterbahnen 26 herum angeordnet.

Eine weitere Möglichkeit zur Herstellung der Wickelkopfplatine 24 ist, dass sowohl die Leiterbahnen 26 als auch die dielektrischen Werkstoffe 30, 32, 34, bevorzugt zeitgleich, mit einem 3D-Druck-Verfahren oder einem Siebdruckverfahren hergestellt werden.

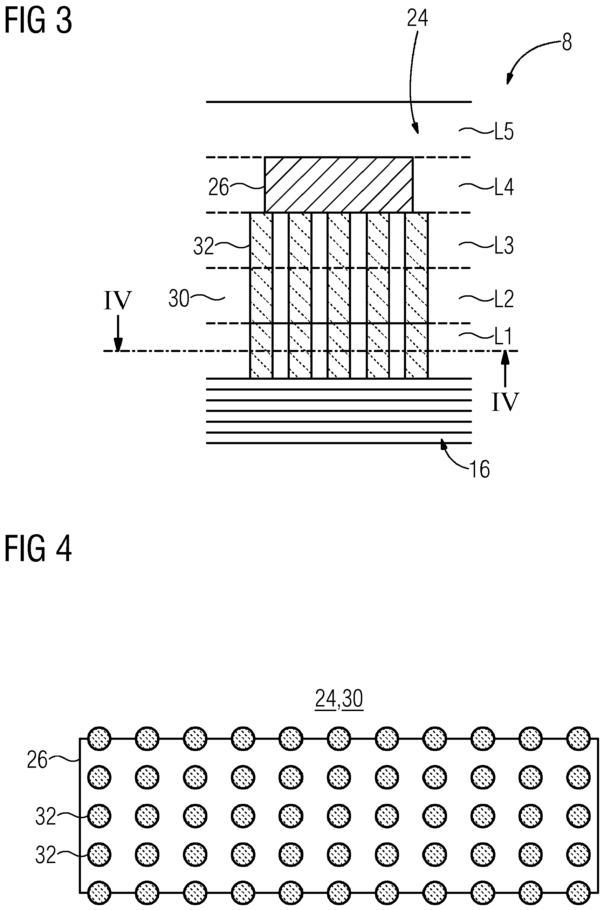

FIG 3 zeigt einen vergrößerten Längsschnitt eines zweiten Beispiels eines Stators 8 einer elektrischen rotierenden Maschine 2 im Bereich der Wickelkopfplatine 24. Exemplarisch ist eine Leiterbahn 26 in der vierten Lage L4 der Wickelkopfplatine 24 angeordnet. Der Bereich mit dem zweiten dielektrischen Werkstoff 32 ist strukturiert, insbesondere in Form mehrerer, beispielsweise identischer, Säulen, zwischen der Leiterbahn 26 und dem Statorblechpaket 16 angeordnet und stellt durch die höhere Wärmeleitfähigkeit und geringere Festigkeit des zweiten dielektrischen Werkstoffs 32 im Vergleich zum ersten dielektrischen Werkstoff 30 ein Optimum aus thermischer Anbindung der Leiterbahn 26 an das Statorblechpaket 16 und Festigkeit der Wickelkopfplatine 24 dar. Die weitere Ausführung des Stators 8 entspricht der Ausführung in FIG 2.

FIG 4 zeigt einen vergrößerten Querschnitt der zweiten Ausführungsform des Stators 8 im Bereich der Wickelkopfplatine 24. Die strukturierte Anordnung des Bereichs mit dem zweiten dielektrischen Werkstoff 32 in der Wickelkopfplatine 24 ist in Form einer Vielzahl von insbesondere identischen Säulen ausgestaltet, die gleichmäßig im Bereich der Leiterbahn 26 verteilt sind. Die weitere Ausführung des Stators 8 entspricht der Ausführung in FIG 3.

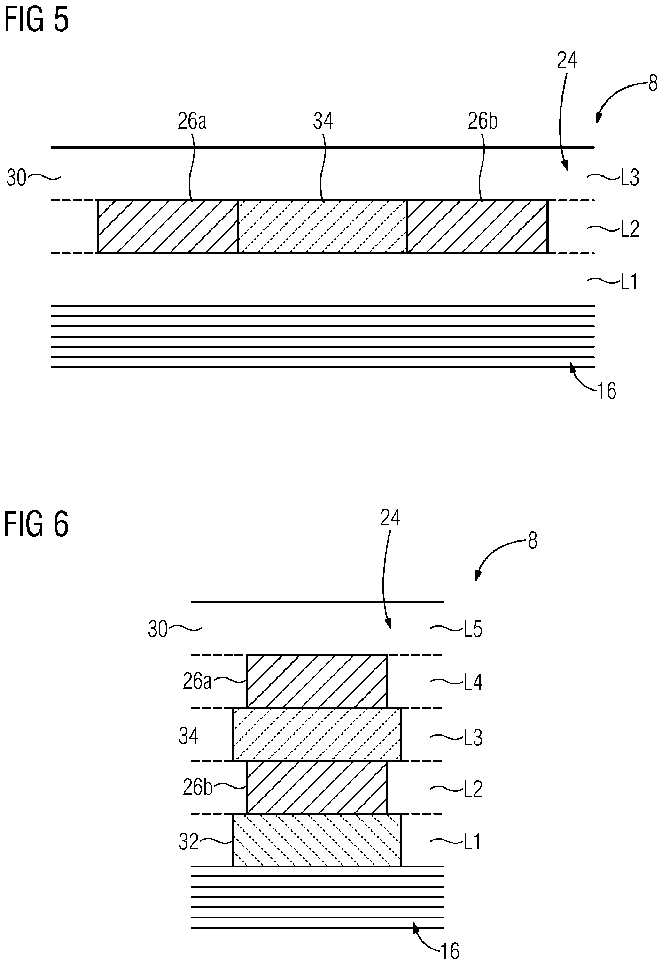

FIG 5 zeigt einen vergrößerten Längsschnitt eines dritten Beispiels eines Stators 8 einer elektrischen rotierenden Maschine 2 im Bereich der Wickelkopfplatine 24, die drei Lagen L1, L2, L3 aufweist. Exemplarisch in der mittleren, zweiten Lage L2 verlaufen zwei Leiterbahnen 26a, 26b. Ebenfalls in der zweiten Lage zwischen den beiden Leiterbahnen 26a, 26b befindet sich ein Bereich mit einem dritten dielektrischen Werkstoff 34, der eine höhere Durchschlagsfestigkeit als der erste dielektrische Werkstoff 30 aufweist. Insbesondere ist der dritte dielektrische Werkstoff 34 als ein keramischer Werkstoff ausgeführt. Alternativ ist der dritte dielektrische Werkstoff 34 als ein Kunststoff mit hoher Durchschlagsfestigkeit ausgeführt. Durch die erhöhte Durchschlagsfestigkeit im Bereich zwischen den beiden Leiterbahnen 26a, 26b ist es möglich, den Abstand zwischen den Leiterbahnen zu verkleinern. Die weitere Ausführung des Stators 8 entspricht der Ausführung in FIG 2.

FIG 6 zeigt einen vergrößerten Längsschnitt eines vierten Beispiels eines Stators 8 einer elektrischen rotierenden Maschine 2 im Bereich der Wickelkopfplatine 24, die, wie in FIG 2, fünf Lagen L1, L2, L3, L4, L5 aufweist. In der zweiten Lage L2 und in der vierten Lage L4 ist jeweils eine Leiterbahn 26a, 26b angeordnet. Insbesondere befindet sich die erste Leiterbahn 26a unmittelbar oberhalb der zweiten Leiterbahn 26b. Wie in FIG 2 ist ein durchgängiger Bereich mit einem zweiten dielektrischen Werkstoff 32 in der ersten Lage L1 angeordnet, wobei der zweite dielektrische Werkstoff 32, der eine höhere Wärmeleitfähigkeit als der erste dielektrische Werkstoff 30 aufweist, eine thermische Verbindung zwischen der zweiten Leiterbahn 26b und dem Statorblechpaket 16 herstellt.

Darüber hinaus ist ein weiterer durchgängiger Bereich mit einem dritten dielektrischen Werkstoff 34 in der dritten Lage L3 zwischen der ersten Leiterbahn 26a und der zweiten Leiterbahn 26b angeordnet. Der dritte dielektrische Werkstoff 34 weist eine höhere Durchschlagsfestigkeit als der erste dielektrische Werkstoff 30 auf. Insbesondere ist der dritte dielektrische Werkstoff 34 als ein keramischer Werkstoff ausgeführt. Alternativ ist der dritte dielektrische Werkstoff 34 als ein Kunststoff mit hoher Durchschlagsfestigkeit ausgeführt. Durch die erhöhte Durchschlagfestigkeit im Bereich zwischen den beiden Leiterbahnen 26a, 26b ist es möglich, die Dicke der dritten Lage L3 zu verkleinern. Die weitere Ausführung des Stators 8 entspricht der Ausführung in FIG 2.

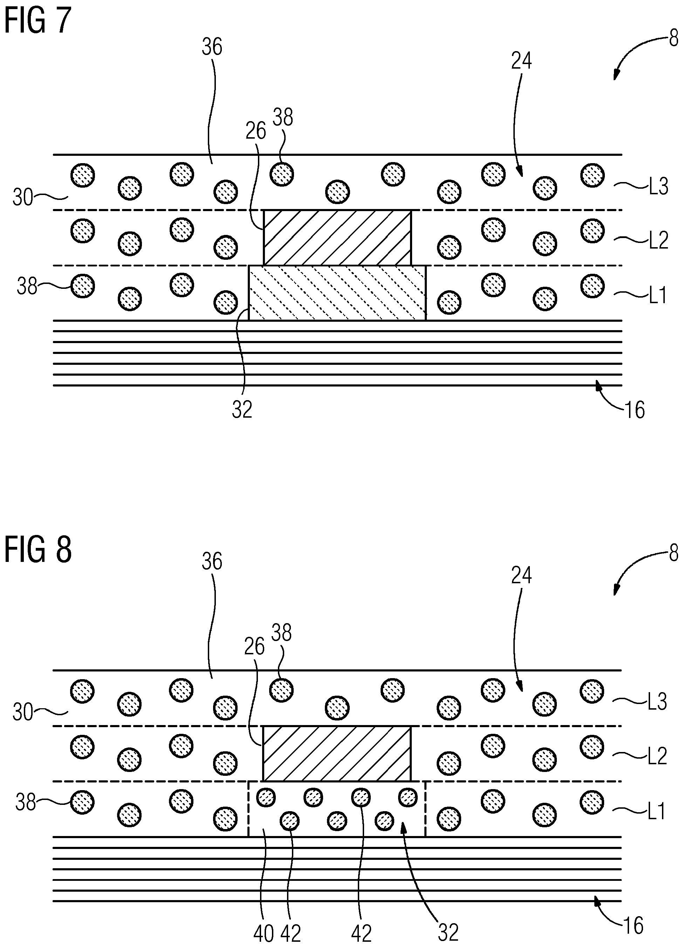

FIG 7 zeigt einen vergrößerten Längsschnitt eines fünften Beispiels eines Stators 8 einer elektrischen rotierenden Maschine 2 im Bereich der Wickelkopfplatine 24, die exemplarisch drei Lagen L1, L2, L3 aufweist. Die Lagen L1, L2, L3 der Wickelkopfplatine 24 werden zu einem Großteil aus einem ersten dielektrischen Werkstoff 30 hergestellt, der als keramischer Werkstoff ausgeführt ist und einen ersten Kunststoff 36 enthält, der mit einem ersten Keramikpulver 38, beispielsweise Aluminiumoxid, versetzt ist. Insbesondere der erste dielektrische Werkstoff 30 des isolierenden Grundkörpers ist aus dem mit dem ersten Keramikpulver 38 versetzten ersten Kunststoff 36 leicht und effizient mittels eines additiven Fertigungsverfahrens herzustellen.

Um die thermische Anbindung der Leiterbahn 26 an das Statorblechpaket 16 und damit die Wärmeabfuhr zu verbessern, ist die Leiterbahn 26 in der ersten Lage L1 über einen durchgängigen Bereich mit einem zweiten dielektrischen Werkstoff 32 thermisch mit dem Statorblechpaket 16 verbunden. Der zweite dielektrische Werkstoff 32 ist ebenfalls als keramischer Werkstoff ausgeführt und enthält beispielsweise Aluminiumnitrid. Darüber hinaus weist der zweite dielektrische Werkstoff 32 eine höhere Wärmeleitfähigkeit als das erste Keramikpulver 38 des ersten dielektrischen Werkstoffs 32 auf. Zumindest einer der dielektrischen Werkstoffe des Stators 8 in FIG 7 wird mit Hilfe eines additiven Fertigungsverfahrens angeordnet. Die weitere Ausführung des Stators 8 entspricht der Ausführung in FIG 2.

FIG 8 zeigt einen vergrößerten Längsschnitt eines sechsten Beispiels eines Stators 8 einer elektrischen rotierenden Maschine 2 im Bereich der Wickelkopfplatine 24. Der Bereich mit dem zweiten dielektrischen Werkstoff 32 verbindet die Leiterbahn 26 in der ersten Lage L1 thermisch mit dem Statorblechpaket 16. Der zweite dielektrische Werkstoff 32 ist als ein zweiter Kunststoff 40 mit einem zweiten Keramikpulver 42 ausgeführt. Alternativ ist der erste Kunststoff 36 mit dem zweiten Kunststoff 40 identisch und der erste keramische Werkstoff 30 und der zweite keramische Werkstoff 32 unterscheiden sich nur durch das mit dem Kunstsoff 36, 40 vermischte Keramikpulver 38, 42. Da der zweite dielektrische Werkstoff 32 zumindest aufgrund des zweiten Keramikpulvers 42 eine höhere Wärmeleitfähigkeit aufweist als der erste keramische Werkstoff 30 mit dem ersten Keramikpulver 40, wird die Entwärmung der stromdurchflossenen Leiterbahn verbessert. Die weitere Ausführung des Stators 8 entspricht der Ausführung in FIG 7.

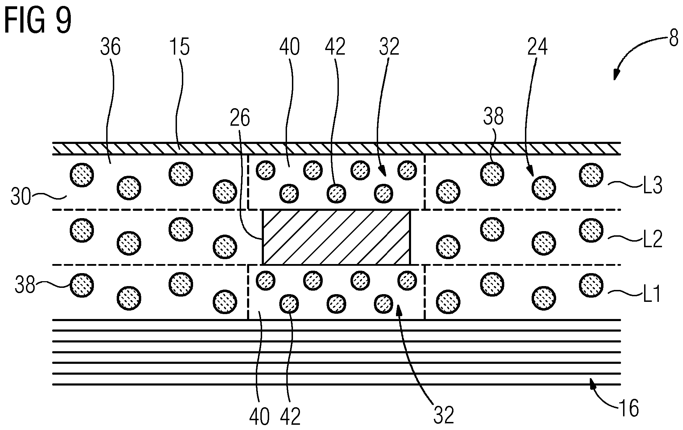

FIG 9 zeigt einen vergrößerten Längsschnitt einer ersten Ausführungsform eines Stators 8 einer elektrischen rotierenden Maschine 2 im Bereich der Wickelkopfplatine 24. Ein Maschinengehäuse 15 liegt auf der Wickelkopfplatine 24 auf, wobei ein weiterer Bereich mit dem zweiten dielektrischen Werkstoff 32 in der dritten Lage L3 angeordnet ist, sodass die Leiterbahn 26 zusätzlich über das Maschinengehäuse 15 entwärmt wird. Die weitere Ausführung des Stators 8 entspricht der Ausführung in FIG 7.

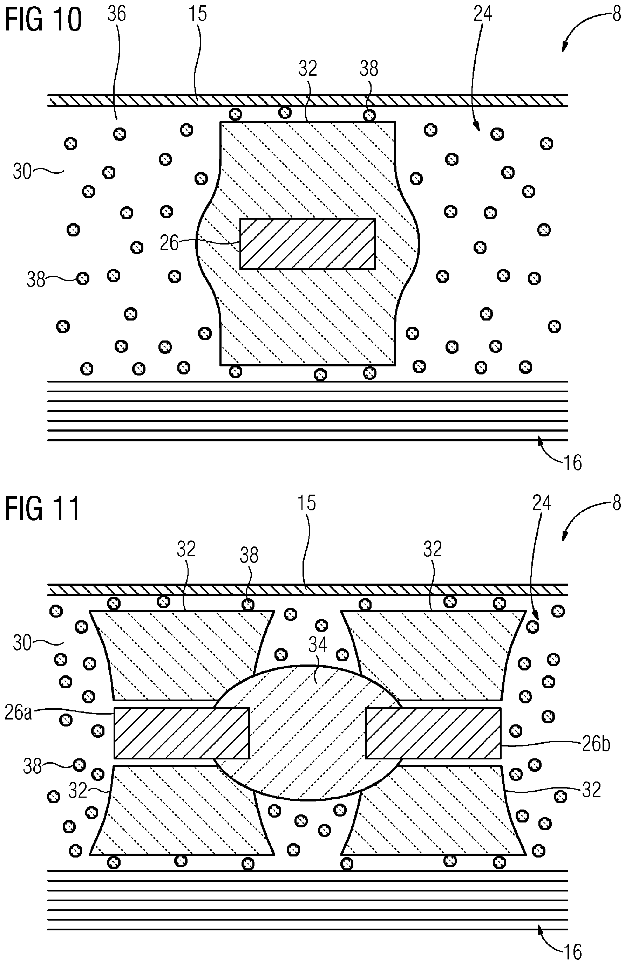

FIG 10 zeigt einen vergrößerten Längsschnitt einer zweiten Ausführungsform eines Stators 8 einer elektrischen rotierenden Maschine 2 im Bereich der Wickelkopfplatine 24. Die Wickelkopfplatine 24, die auf dem Statorblechpaket 16 aufliegt, wird ohne einen Lagenaufbau aus zwei dielektrischen Werkstoffen 30, 32 mit einem additiven Fertigungsverfahren hergestellt.

Der erste dielektrische Werkstoff 30 ist als ein keramischer Werkstoff ausgeführt und enthält einen ersten Kunststoff 36, der mit einem ersten Keramikpulver 38 versetzt ist. Das Maschinengehäuse 15 der elektrischen rotierenden Maschine 2 liegt auf der Wickelkopfplatine 24 auf. Eine Leiterbahn 26 ist in der Wickelkopfplatine 24 angeordnet. Ein Bereich mit einem zweiten dielektrischen Werkstoff 32, der als keramischer Werkstoff, beispielsweise Aluminiumnitrid, ausgeführt ist und eine höhere Wärmeleitfähigkeit als der erste dielektrische Werkstoff 30 aufweist, ist zwischen dem Statorblechpaket 16 und dem Maschinengehäuse 15 um die Leiterbahn 26 herum so angeordnet, dass Wärme von der Leiterbahn 26 über den Bereich mit dem zweiten dielektrischen Werkstoff 32 auf das Statorblechpaket 16 und das Maschinengehäuse 15 übertragen wird. Die Form und Anordnung des Bereichs mit dem zweiten dielektrischen Werkstoffs 32 ist hinsichtlich einer effizienten Wärmeübertragung und einer hohen mechanischen Stabilität optimiert. Insbesondere um eine hohe mechanische Stabilität zu gewährleisten, ist der Bereich mit dem zweiten dielektrischen Werkstoff 32 vollständig vom ersten dielektrischen Werkstoff 30 umgeben und so in den isolierenden Grundkörper integriert. Der isolierende Grundkörper schließt nahtlos nach außen hin ab. Die weitere Ausführung des Stators 8 entspricht der Ausführung in FIG 7.

FIG 11 zeigt einen vergrößerten Längsschnitt einer dritten Ausführungsform eines Stators 8 einer elektrischen rotierenden Maschine 2 im Bereich der Wickelkopfplatine 24. Wie in FIG 10 wird die Wickelkopfplatine 24 ohne einen Lagenaufbau mit einem additiven Fertigungsverfahren hergestellt und weist drei unterschiedliche dielektrische Werkstoffe 30, 32, 34 auf. Exemplarisch zwei Leiterbahnen 26a, 26b verlaufen in der Wickelkopfplatine 24. An jeder der beiden Leiterbahnen 26a, 26b ist ein Bereich mit dem zweiten dielektrischen Werkstoff 32, der als keramischer Werkstoff, beispielsweise Aluminiumnitrid, ausgeführt ist und eine höhere Wärmeleitfähigkeit als der erste dielektrische Werkstoff 30 aufweist, zwischen dem Statorblechpaket 16 und dem Maschinengehäuse 15 so angeordnet, dass Wärme von der jeweiligen Leiterbahn 26a, 26b über den zweiten dielektrischen Werkstoff 32 auf das Statorblechpaket 16 und das Maschinengehäuse 15 übertragen wird. Hierbei ist der Bereich mit dem zweiten dielektrischen Werkstoff 32 vollständig vom Bereich mit dem ersten dielektrischen Werkstoff 30 umgeben und so in den isolierenden Grundkörper integriert, um eine hohe mechanische Stabilität zu gewährleisten. Alternativ ist der zweite dielektrische Werkstoff 32 als Kunststoff 40 mit einem Keramikpulver 42 ausgeführt.

Zusätzlich befindet sich zwischen den Leiterbahnen 26a, 26b ein Bereich mit dem dritten dielektrischen Werkstoff 34, der eine höhere Durchschlagsfestigkeit als der erste dielektrische Werkstoff 30 und der zweite dielektrische Werkstoff 32 aufweist. Der dritte dielektrische Werkstoff 34 ist als ein keramischer Werkstoff oder als ein Kunststoff mit hoher Durchschlagsfestigkeit ausgeführt. Die Anordnung des Bereichs mit dem dritten dielektrischen Werkstoff 34 ist hinsichtlich der Feldverteilung zwischen den Leiterbahnen 26a, 26b optimiert. Die weitere Ausführung des Stators 8 entspricht der Ausführung in FIG 10.

Der Schutzbereich ist durch die Ansprüche definiert.

## Patentansprüche

1. Stator (8) für eine elektrische rotierende Maschine (2), welcher ein Statorblechpaket (16) mit Spulenstäben (20) und zumindest eine Wickelkopfplatine (24) aufweist,
wobei die zumindest eine Wickelkopfplatine (24) auf einer Stirnseite (23) des Statorblechpakets (16) aufliegt,
wobei die Wickelkopfplatine (24) einen Grundkörper mit einem ersten dielektrischen Werkstoff (30) aufweist,
wobei in die Wickelkopfplatine (24) Leiterbahnen (26, 26a, 26b) integriert sind, die mit den Spulenstäben (20) verbunden sind,
und wobei die Wickelkopfplatine (24) einen Bereich mit einem zweiten dielektrischen Werkstoff (32) aufweist,
wobei der zweite dielektrische Werkstoff (32) eine höhere Wärmeleitfähigkeit als der erste dielektrische Werkstoff (30) des Grundkörpers (28) aufweist,
wobei der Bereich mit dem zweiten dielektrischen Werkstoff (32) derartig zwischen zumindest einer Leiterbahn (26, 26a, 26b) und dem Statorblechpaket (16) angeordnet ist, dass Wärme über den zweiten dielektrischen Werkstoff (32) zwischen der zumindest einen Leiterbahn (26, 26a, 26b) und dem Statorblechpaket (16) übertragbar ist,
**dadurch gekennzeichnet, dass**
ein weiterer Bereich mit dem zweiten dielektrischen Werkstoff (32) derartig zwischen zumindest einer Leiterbahn (26, 26a, 26b) und einer Seite der Wickelkopfplatine, auf der, wenn der Stator in der elektrischen Maschine eingebaut ist, ein Maschinengehäuse (15) der elektrischen rotierenden Maschine (2) aufliegt, angeordnet ist, dass Wärme über den zweiten dielektrischen Werkstoff (32) zwischen der zumindest einen Leiterbahn (26, 26a, 26b) und dem Maschinengehäuse (15) übertragbar ist, und
wobei der zweite dielektrische Werkstoff (32) Aluminiumnitrid und/oder Berylliumoxid enthält.

2. Stator (8) nach Anspruch 1,
wobei die Wickelkopfplatine einen Bereich mit einem dritten dielektrischen Werkstoff (34) aufweist,
wobei der dritte dielektrische Werkstoff (34) eine höhere Durchschlagsfestigkeit als der erste dielektrische Werkstoff (30) aufweist, und
wobei der Bereich mit dem dritten dielektrischen Werkstoff (34) zwischen zumindest zwei Leiterbahnen (26, 26a, 26b) angeordnet ist.

3. Stator (8) nach einem der Ansprüche 1 oder 2,
wobei die zumindest eine Wickelkopfplatine (24) zumindest teilweise mit einem additiven Fertigungsverfahren hergestellt ist.

4. Stator (8) nach einem der vorherigen Ansprüche,
wobei zumindest einer der dielektrischen Werkstoffe (30, 32, 34) als keramischer Werkstoff ausgebildet ist.

5. Stator (8) nach Anspruch 2,
wobei der dritte dielektrische Werkstoff (34) Aluminiumnitrid und/oder Berylliumoxid enthält.

6. Stator (8) nach einem der vorherigen Ansprüche,
wobei der erste dielektrische Werkstoff (30) Aluminiumoxid enthält.

7. Stator (8) nach Anspruch 2 oder nach Anspruch 2 und einem der Ansprüche 3-6,
wobei der erste dielektrische Werkstoff (30) eine höhere mechanische Festigkeit aufweist als der zweite dielektrische Werkstoff (32) und der dritte dielektrische Werkstoff (34).

8. Stator (8) nach einem der vorherigen Ansprüche,
wobei zumindest einer der dielektrischen Werkstoffe (30, 32, 34) einen Kunststoff (36, 40, 44) mit einem Keramikpulver (38, 42, 46) enthält.

9. Stator (8) nach einem der vorherigen Ansprüche,
wobei die Wickelkopfplatine (24) mindestens drei Lagen (L1, L2, L3, L4, L5) aufweist.

10. Stator (8) nach Anspruch 9,
wobei in zumindest einer Lage (L1, L2, L3, L4, L5) der Wickelkopfplatine (24) zumindest zwei unterschiedliche dielektrische Werkstoffe (30, 32, 34) angeordnet sind.

11. Elektrische rotierende Maschine (2) mit mindestens einem Stator (8) nach einem der Ansprüche 1 bis 10.

## Claims

1. Stator (8) for an electrical rotating machine (2),
which stator has a stator laminated core (16) with coil bars (20) and has at least one winding head board (24),
wherein the at least one winding head board (24) rests on an end side (23) of the stator laminated core (16),
wherein the winding head board (24) has a main body comprising a first dielectric material (30),
wherein conductor tracks (26, 26a, 26b) which are connected to the coil bars (20) are integrated into the winding head board (24),
and wherein the winding head board (24) has a region comprising a second dielectric material (32),
wherein the second dielectric material (32) has a higher thermal conductivity than the first dielectric material (30) of the main body (28),
wherein the region comprising the second dielectric material (32) is arranged between at least one conductor track (26, 26a, 26b) and the stator laminated core (16) in such a way that heat can be transmitted between the at least one conductor track (26, 26a, 26b) and the stator laminated core (16) by means of the second dielectric material (32),
**characterized in that**
a further region comprising the second dielectric material (32) is arranged between at least one conductor track (26, 26a, 26b) and one side of the winding head board, on which a machine housing (15) of the electrical rotating machine (2) rests when the stator is installed in the electrical machine, in such a way that heat can be transmitted between the at least one conductor track (26, 26a, 26b) and the machine housing (15) via the second dielectric material (32),
wherein the second dielectric material (32) contains aluminium nitride and/or beryllium oxide.

2. Stator (8) according to Claim 1,
wherein the winding head board has a region comprising a third dielectric material (34),
wherein the third dielectric material (34) has a higher dielectric strength than the first dielectric material (30), and
wherein the region comprising the third dielectric material (34) is arranged between at least two conductor tracks (26, 26a, 26b).

3. Stator (8) according to either of Claims 1 and 2,
wherein the at least one winding head board (24) is produced at least partially using an additive manufacturing process.

4. Stator (8) according to one of the preceding claims,
wherein at least one of the dielectric materials (30, 32, 34) is in the form of a ceramic material.

5. Stator (8) according to Claim 2,
wherein the third dielectric material (34) contains aluminium nitride and/or beryllium oxide.

6. Stator (8) according to one of the preceding claims,
wherein the first dielectric material (30) contains aluminium oxide.

7. Stator (8) according to Claim 2 or according to Claim 2 and one of Claims 3-6,
wherein the first dielectric material (30) has a higher mechanical strength than the second dielectric material (32) and the third dielectric material (34).

8. Stator (8) according to one of the preceding claims,
wherein at least one of the dielectric materials (30, 32, 34) contains a plastic (36, 40, 44) comprising a ceramic powder (38, 42, 46).

9. Stator (8) according to one of the preceding claims,
wherein the winding head board (24) has at least three layers (L1, L2, L3, L4, L5).

10. Stator (8) according to Claim 9,
wherein at least two different dielectric materials (30, 32, 34) are arranged in at least one layer (L1, L2, L3, L4, L5) of the winding head board (24).

11. Electrical rotating machine (2) comprising at least one stator (8) according to one of Claims 1 to 10.

## Revendications

1. Stator (8) d'une machine (2) électrique tournante, qui a un paquet (16) de tôles statoriques ayant des barreaux (20) de bobine et au moins une platine (24) de tête d'enroulement,
dans lequel la au moins une platine (24) de la tête d'enroulement s'applique à un côté (23) frontal du paquet (16) de tôles statoriques,
dans lequel la platine (24) de la tête d'enroulement a un corps de base ayant un premier matériau (30) diélectrique,
dans lequel dans la platine (24) de la tête d'enroulement sont intégrées des pistes (26, 26a, 26b) conductrices, qui sont connectées aux barreaux (20) de bobine,
et dans lequel la platine (24) de la tête d'enroulement a une partie ayant un deuxième matériau (32) électrique,
dans lequel le deuxième matériau (32) électrique a une conductibilité de la chaleur plus grande que le premier matériau (30) diélectrique du corps (28) de base,
dans lequel la partie ayant le deuxième matériau (32) diélectrique est disposée de telle sorte, entre au moins une piste (26, 26a, 26b) conductrice et le paquet (16) de tôles statoriques, que de la chaleur peut être transmise par le deuxième matériau (32) diélectrique entre la au moins une piste (26, 26a, 26b) conductrice et le paquet (16) de tôles statoriques,
**caractérisé en ce que**
il est disposé une autre partie ayant le deuxième matériau (32) diélectrique de telle sorte, qu'entre au moins une piste (26, 26a, 26b) conductrice et un côté de la platine de la tête d'enroulement, sur lequel, lorsque le stator est monté dans une machine électrique, s'applique une enveloppe (15) de la machine (2) électrique tournante, de la chaleur peut être transmise par le deuxième matériau (32) diélectrique entre la au moins une piste (26, 26a, 26b) conductrice et l'enveloppe (15) de la machine,
dans lequel le deuxième matériau (32) diélectrique contient du nitrure d'aluminium ou de l'oxyde de béryllium.

2. Stator (8) suivant la revendication 1,
dans lequel la platine de la tête d'enroulement a une partie ayant un troisième matériau (34) diélectrique,
dans lequel le troisième matériau (34) diélectrique a une rigidité plus grande que le premier matériau (30) diélectrique, et
dans lequel la partie ayant le troisième matériau (34) diélectrique est disposé entre au moins deux pistes (26, 26a, 26b) conductrices.

3. Stator (8) suivant l'une des revendications 1 ou 2,
dans lequel la au moins une platine (24) de la tête d'enroulement est fabriquée au moins en partie par un procédé de fabrication additive.

4. Stator (8) suivant l'une des revendications précédentes, dans lequel au moins l'un des matériau (30, 32, 34) diélectrique est constitué sous la forme d'un matériau céramique.

5. Stator (8) suivant la revendication 2,
dans lequel le troisième matériau (34) diélectrique contient du nitrure d'aluminium et/ou de l'oxyde de béryllium.

6. Stator (8) suivant l'une des revendications précédentes,
dans lequel le premier matériau (30) diélectrique contient de l'oxyde d'aluminium.

7. Stator (8) suivant la revendication 2 ou suivant la revendication 2 et l'une des revendications 3 à 6,
dans lequel le premier matériau (30) diélectrique a une résistance mécanique plus grande que le deuxième matériau (32) diélectrique et que le troisième matériau (34) diélectrique.

8. Stator (8) suivant l'une des revendications précédentes,
dans lequel au moins l'un des matériaux (30, 32, 34) diélectrique contient une matière plastique (36, 40, 44) ayant une poudre (38, 42, 46) de céramique.

9. Stator (8) suivant l'une des revendications précédentes,
dans lequel la platine (24) de la bobine d'enroulement a au moins trois couches (L1, L2, L3, L4, L5).

10. Stator (8) suivant la revendication 9,
dans lequel au moins deux matériaux (30, 32, 34) diélectriques différents sont disposés dans au moins une couche (L1, L2, L3, L4, L5) de la platine (24) de la tête d'enroulement.

11. Machine (2) électrique tournante ayant au moins un stator (8) suivant l'une des revendications 1 à 10.
